Europäisches Patentamt

European Patent Office

Office européen des brevets

(19)

(11) Publication number : **0 688 819 A1**

# EUROPEAN PATENT APPLICATION

(12)

(21) Application number : 95304236.3

(22) Date of filing : 19.06.95

(51) Int. Cl.⁶ : **C08L 23/04, C08J 5/18**

(30) Priority : **21.06.94 JP 138810/94**

(43) Date of publication of application :
**27.12.95 Bulletin 95/52**

(84) Designated Contracting States :
**DE FR GB IT**

(71) Applicant : **SUMITOMO CHEMICAL COMPANY, LIMITED**
**5-33, Kitahama 4-chome**
**Chuo-ku**
**Osaka (JP)**

(72) Inventor : **Hosoda, Satoru**
**872-2, Saihiro**
**Ichihara-shi, Chiba (JP)**
Inventor : **Nomura, Ryoichi**
**1-4-6, Shiinoki-dai**
**Ichihara-shi, Chiba (JP)**
Inventor : **Koyama, Satoru**
**3662-8, Kubota**
**Sodegaura-shi, Chiba (JP)**

(74) Representative : **Woods, Geoffrey Corlett et al**
**J.A. KEMP & CO.**
**14 South Square**
**Gray's Inn**
**London WC1R 5LX (GB)**

(54) **Packaging film for retorted food**

(57)    The invention provides a packaging film for retorted food comprising a polyethylene resin composition comprising 70 to 92% by weight of a component (A) and 30 to 8% by weight of a component (B) wherein :

component (A) is an ethylene-α-olefin copolymer comprising ethylene and an α-olefin having 3 to 18 carbon atoms, said copolymer having a density of 0.920 to 0.940 g/cm³ and a melt flow rate of 0.1 to 20 g/10 minutes at a temperature of 190°C under a load of 2.16 kg ;

component (B) is a high-density polyethylene having a density of 0.945 g/cm³ or more and a melt flow rate of 0.1 to 20 g/10 minutes at a temperature of 190°C under a load of 2.16 kg.

EP 0 688 819 A1

Field of the Invention

The present invention relates to a packaging film for retorted food.

Retort means a treatment of food by heat-sterilizing apparatus, and packaging films for retorted food are widely used as materials for packaging a heat-sterilized food.

Various properties such as barrier properties against oxygen, water content, ultraviolet rays and bacteria, heat resistance, sealing properties, workability and hygienic properties are required for such packaging films for retorted food to maintain the sterility until consumption of food. In order to satisfy these requirements, polyester or nylon having good barrier properties is used as an outer layer and polyethylene or polypropylene having good heat sealing properties is used as an inner layer, these are adhered and laminated to each other to obtain packaging films for retorted food.

Retorted foods are manufactured by packaging and sealing foods completely in a packaging film and then heat-sterilizing foods in a packaging film at high temperature for constant time. Thus, the packaging films for retorted food are required to have excellent heat resistance against the heat-sterilizing treatment.

Hitherto, polypropylene films have been used for packaging films for retorted food in case of heat-sterilizing at temperature above 110 °C. However, distribution of retorted food in the frozen state being demanded recently, an improvement of impact resistance at low temperature has been demanded to protect a package from damage or tears due to a drop of the package in the frozen state and so on.

Copolymerization with small quantity of ethylene is a typical method for improving the impact resistance of polypropylene at low temperature. But even this method can not improve the impact resistance sufficiently.

On the other hand, polyethylene has good impact resistance, but poor heat resistance.

The present inventors have found that a packaging film for retorted food comprising a specific polyethylene resin composition has excellent heat resistance and impact resistance at low temperature, and further has favorable extrusion workability, and has good heat-sealing properties when used as a composite film.

The present invention provides a packaging film for retorted food comprising a polyethylene resin composition comprising 70 to 92 % by weight of a component (A) and 30 to 8 % by weight of a component (B) wherein:

component (A) is an ethylene-$\alpha$-olefin copolymer comprising ethylene and an $\alpha$-olefin having 3 to 18 carbon atoms, said copolymer having a density of 0.920 to 0.940 g/cm$^3$ and a melt flow rate of 0.1 to 20 g/10 minutes at a temperature of 190°C under a load of 2.16 kg; and

component (B) is a high-density polyethylene having a density of 0.945 g/cm$^3$ or more and a melt flow rate of 0.1 to 20 g/10 minutes at a temperature of 190°C under a load of 2.16 kg.

The component (A) of the present invention is an ethylene-$\alpha$-olefin copolymer comprising ethylene and $\alpha$-olefin having 3 to 18 carbon atoms, wherein said copolymer has density of 0.920 to 0.940 g/cm$^3$ and a melt flow rate of 0.1 to 20 g/10 minutes at temperature of 190°C under a load of 2.16 kg.

Examples of $\alpha$-olefin having 3 to 18 carbon atoms include propylene, 1-butene, 4-methyl-1-pentene, 1-hexene, 1-octene and 1-decene. 1-Butene, 1-hexene, 4-methyl-1-pentene and 1-octene are preferable among these $\alpha$-olefins, and $\alpha$-olefins having 6 or more carbon atoms are especially preferable. These $\alpha$-olefins may be used alone or in combination.

The content of the $\alpha$-olefin in the component (A) is, generally, 1 to 10% by weight, preferably 1 to 8% by weight. When the content of $\alpha$-olefin is less than 1% by weight, impact resistance may become poor, whereas the content of $\alpha$-olefin is greater than 10% by weight, heat fusion may occur in retorting.

The melt flow rate of the component (A) is 0.1 to 20g /10 minutes, preferably 0.5 to 5 g/10 minutes at a temperature of 190°C under a load of 2.16 kg. When the melt flow rate is less than 0.1 g/10 minutes, melt viscosity becomes excessively high and thereby extrusion workability becomes poor, whereas when the melt flow rate is greater than 20 g/10 minutes, heat-sealing strength when used as a composite film becomes poor.

The density of the component (A) is 0.920 to 0.940 g/cm$^3$, preferably 0.925 to 0.938 g/cm$^3$. When the density is less than 0.920 g/cm$^3$, heat resistance becomes poor, whereas when the density is greater than 0.940 g/cm$^3$, impact resistance at low temperature becomes poor.

The component (A) of the present invention may be prepared, for example, by polymerising ethylene and $\alpha$-olefin having 3 to 18 carbon atoms with a heterogeneous transition metal catalyst such as TiCl$_3$ or a homogeneous catalyst such as a metallocene in the presence or absence of a solvent such as cyclohexane in a gas-solid phase, a liquid-solid phase, or a homogeneous liquid phase. The temperature and pressure for polymerisation are preferably 30 to 300°C and ambient pressure to 3,000 kg/cm$^2$, respectively.

The component (B) of the present invention is a high-density polyethylene having a density of 0.945 g/cm$^3$ or more and a melt flow rate of 0.1 to 20 g/10 minutes at a temperature of 190°C under a load of 2.16 kg.

The melt flow rate of the component (B) is 0.1 to 20 g/10 minutes, preferably 0.5 to 15 g/10 minutes at temperature of 190°C under a load of 2.16 kg. When the melt flow rate is less than 0.1 g/10 minutes, melt viscosity becomes excessively high and thereby extrusion workability becomes poor, whereas when the melt flow rate is greater than 20 g/10 minutes, impact resistance at low temperature of a composite film becomes poor.

The density of the component (B) is 0.945 g/cm$^3$ or more, preferably 0.945 to 0.965 g/cm$^3$. When the density is less than 0.945 g/cm$^3$, heat resistance becomes poor, whereas when the density is greater than 0.965 g/cm$^3$, impact resistance at low temperature may become poor.

The component (B) of the present invention comprising high-density polyethylene may be prepared, for example, by polymerising ethylene in the presence or absence of small amount of $\alpha$-olefin having 3 to 18 carbon atoms with a heterogeneous transition metal catalyst such as TiCl$_3$ or a homogeneous catalyst such as a metallocene in the presence or absence of a solvent such as cyclohexane in a gas-solid phase, a liquid-solid phase, or a homogeneous liquid phase. The temperature and pressure for polymerisation are preferably 30 to 300°C and ambient pressure to 3,000 kg/cm$^2$, respectively.

The polyethylene resin composition of the present invention comprises 70 to 92 % by weight of, preferably 80 to 92 % by weight of the component (A) and 30 to 8 % by weight of, preferably 20 to 8 % by weight of the component (B). When the content of the component (A) is less than 70 % by weight, impact resistance at low temperature becomes poor, whereas when the content is greater than by 92% by weight, heat resistance becomes poor.

The density of the polyethylene resin composition of the present invention is preferably 0.925 to 0.945 g/cm$^3$, more preferably 0.927 to 0.940 g/cm$^3$. When the density is less than 0.925 g/cm$^3$, heat resistance may become poor, whereas when the density is greater than 0.945 g/cm$^3$, impact resistance at low temperature may become poor.

The polyethylene resin composition thus obtained is processed to a packaging film for retorted food. The method of processing the polyethylene resin composition to a packaging film is not restricted. The packaging film may be manufactured, for example, by mixing the component (A) with the component (B), and further with an antioxidant, a lubricant, an anti-blocking agent, an anti-static agent and/or a neutralising agent according to demand, with a single-screw extruder, a twin-screw extruder or a Banbury mixer to obtain a resin composition and processing said resin composition to a film by blow extrusion or with a T-die. A plurality of the film thus obtained or a combination of the film with another film composed of a thermoplastic resin may be co-extruded to form a multi-layered film.

A package for retorted food can be manufactured by bonding the film comprising above-mentioned polyethylene resin composition as an inner layer to another film, e.g. a film of nylon or poly(ethylene terephthalate), with excellent barrier properties as an outer layer.

The invention provides a packaging film for retorted food having excellent heat resistance and impact resistance at low temperature, and further having favourable extrusion workability and heat-sealing properties when used as a composite film.

## EXAMPLES

The invention is further described in detail according to preferable examples, although the examples below are only illustrative and not restrictive in any sense.

Physical properties of the components, the composition, and the film are measured in the following manner:

(1) Density

The density was measured in conformity with JIS K6760 (ASTM-D792).

(2) Melt flow rate (MFR)

The melt flow rates in this specification, including the accompanying claims, are as measured in conformity with JIS K6760 (ASTM-D1238). The melt flow rate of polypropylene in Reference Example 5 was measured at temperature of 230°C.

(3) Heat resistance

A film laminate was prepared by bonding the packaging film for retorted food to a nylon base with an adhesive for dry laminating. A piece of 3cm in width and 12cm in length was cut from the film laminate. A sealant surface was laid upon a 3cm x 4cm rectangular end of the cut piece, and the laminate was heated at temperature of T°C for 30 minutes under the load of 500 g. After the laminate was cooled to room temperature, the overlapped portion was pulled at the rate of 200 mm/minute with a tensile machine for a bond strength. The heat resistance was evaluated based on the heating temperature (T°C) giving the bond strength of 4 kg/cm$^2$. The higher heating temperature represents the more preferable heat resistance.

(4) Extrusion workability

Resin pellets (40 g) were fused and kneaded at the temperature of 160 °C and the roller revolving speed of 60 rpm with a Roller Mixer Type 50 (capacity: 60 cc) of Brabender Plasti-Corder (model PLV-151: manufactured by Brabender Corporation). After 30 minutes, torque (g.m) was measured as an index for extrusion workability.

(5) Impact resistance at low temperature

Ten 150mm x 200 mm bags were prepared from the packaging film dry-laminated with nylon, and 250 ml of a saline solution was heat-sealed in each bag. The bags were cooled to the temperature of 0°C and free-fallen to a concrete surface from the height of 1 m. The number of falls before breaking of all the bags was measured.

Examples 1 to 7 and Reference Examples 1 to 6

A resin composition was prepared by mixing the components (A) and (B) (components (A) + (B) = 100 parts by weight) according to formulation shown in Tables 1 to 3 with 0.15 parts by weight of Irganox 1076 (antioxidant manufactured by Ciba-Geigy Ltd.), 0.10 parts by weight of Irgafos 168 (antioxidant manufactured by Ciba-Geigy Ltd.), 0.3 parts by weight of silica (anti-blocking agent), and 0.04 parts by weight of erucamide (lubricant). The resin composition was processed to a film with a T-die or by blow extrusion and treated with corona discharge at 45 dyne/cm.

In the T-die process, the resin composition was extruded from a straight manifold T-die (die width: 600 mm; die lip: 1.0 mm) attached to a 90 mmΦ extruder (screw Length/Diameter (L/D)=32) at the die temperature of 240°C and the extrusion rate of 50 kg/hr. The extruded film was cooled with a 600 mm semi-mat roll regulated at the temperature of 50°C and wound on a paper cylinder to a film of 60 µm in thickness.

In the blown film process, the resin composition was extruded from a 125 mm Φ die (lip: 2mm, temperature: 200°C) attached to a 50 mm Φ extruder at the extrusion rate of 30 kg/hr to a film of blow up ratio (BUR) 2.1 and 60 µm in thickness.

The films thus obtained were measured and evaluated according to the methods described above. The results are shown in Tables 1 to 3.

Table 1

|  | Examples | | | | |
|---|---|---|---|---|---|
|  | 1 | 2 | 3 | 4 | 5 |
| **Formulation** | | | | | |
| Component (A) | | | | | |
| Content  wt% | 92 | 85 | 85 | 80 | 75 |
| Type  *1 | A1 | A1 | A2 | A3 | A4 |
| Properties | | | | | |
| MFR  g/10 minutes | 1.7 | 1.7 | 1.0 | 2.1 | 2.0 |
| Density  g/cm$^3$ | 0.936 | 0.936 | 0.938 | 0.931 | 0.926 |
| Component (B) | | | | | |
| Content  wt% | 8 | 15 | 15 | 20 | 25 |
| Type | | | | | |
| MFR  g/10 minutes | 1.0 | 5.0 | 12.0 | 1.0 | 1.0 |
| Density  g/cm$^3$ | 0.960 | 0.955 | 0.950 | 0.948 | 0.951 |
| Density of (A)+(B) g/cm$^3$ | 0.938 | 0.939 | 0.940 | 0.934 | 0.937 |
| Processing method  *2 | T | T | T | T | B |
| **Evaluation** | | | | | |
| Heat resistance  ℃ | 116 | 119 | 121 | 110 | 112 |
| Extrusion workability (torque) g.m | 2000 | 1800 | 2000 | 1900 | 1900 |
| Impact resistance at low temperature (number of falls) | 10 | 10 | 11 | 13 | 13 |

Table 2

| | Examples | | Reference. Examples | | |
|---|---|---|---|---|---|
| | 6 | 7 | 1 | 2 | 3 |
| Formulation | | | | | |
| Component (A) Content wt% | 95 | 90 | 100 | 40 | 100 |
| Type *1 | A5 | A6 | A7 | A7 | A3 |
| Properties MFR g/10 minutes | 2.5 | 2.0 | 2.0 | 2.0 | 2.1 |
| Density g/cm³ | 0.930 | 0.925 | 0.925 | 0.925 | 0.931 |
| Component (B) Content wt% | 5 | 10 | 0 | 60 | 0 |
| Type | | | | | |
| MFR g/10 minutes | 0.5 | 0.5 | – | 5.0 | – |
| Density g/cm³ | 0.948 | 0.948 | – | 0.955 | – |
| Density of (A)+(B) g/cm³ | 0.931 | 0.927 | 0.925 | 0.943 | 0.931 |
| Processing method *2 | B | B | T | T | T |
| Evaluation Heat resistance ℃ | 94 | 93 | 78 | 120 | 82 |
| Extrusion workability (torque) g.m | 1700 | 1900 | 1800 | 1600 | 1800 |
| Impact resistance at low temperature (number of falls) | 13 | 15 | 20 | 7 | 15 |

Table 3

| | 4 | Reference 5 | Examples 6 |
|---|---|---|---|
| Formulation | | | |
| Component (A) | | | |
| Content wt% | 0 | 100 | 50 |
| Type *1 | – | PP | A3 |
| Properties | | | |
| MFR g/10 minutes | – | 2.1 | 2.1 |
| Density g/cm³ | – | 0.897 | 0.931 |
| Component (B) | | | |
| Content wt% | 100 | 0 | 40 |
| Type | | | |
| MFR g/10 minutes | 5.0 | – | 5.0 |
| Density g/cm³ | 0.955 | – | 0.955 |
| Component (C) | | | |
| Content wt% | – | – | 10 |
| Type | | | |
| MFR g/10 minutes | – | – | 2.0 |
| Density g/cm³ | 0.955 | – | 0.910 |
| Density of (A)+(B) g/cm³ | 0.955 | 0.897 | – |
| Density of (A)+(B)+(C) g/cm³ | – | – | 0.938 |
| Processing method *2 | T | T | T |
| Evaluation | | | |
| Heat resistance ℃ | 123 | 123 | 95 |
| Extrusion workability (torque) g.m | 1200 | *3 | 1500 |
| Impact resistance at low temperature | | | |
| (number of falls) | 2 | 2 | 5 |

*1: Varieties of Components (A)

A1: Ethylene-1-hexene copolymer (content of 1-hexene = 4.0 percent by weight)

A2: Ethylene-1-hexene copolymer (content of 1-hexene = 3.9 percent by weight)

A3: Ethylene-1-butene copolymer (content of 1-butene = 3.6 percent by weight)

A4: Ethylene-4-methyl-1-pentene copolymer (content of 4-methyl-1-pentene = 3.5 percent by weight)

A5: Ethylene-1-butene copolymer (content of 1-butene = 2.8 percent by weight)

A6: Ethylene-1-butene copolymer (content of 1-butene = 4.5 percent by weight)

A7: Ethylene-1-hexene copolymer (content of 1-hexene = 6.2 percent by weight)

PP: Polypropylene (propylene-ethylene copolymer containing 9 percent by weight of ethylene) was used instead of the component (A) and the component (B).

*2: Processing Method

T: T-die process

B: Blow extrusion process

*3: Not sufficiently fused and incapable of measurement

**Claims**

1. A packaging film for retorted food comprising a polyethylene resin composition comprising 70 to 92% by weight of a component (A) and 30 to 8% by weight of a component (B) wherein:
   component (A) is an ethylene-$\alpha$-olefin copolymer comprising ethylene and an $\alpha$-olefin having 3 to 18 carbon atoms, said copolymer having a density of 0.920 to 0.940 g/cm$^3$ and a melt flow rate of 0.1 to 20 g/10 minutes at a temperature of 190°C under a load of 2.16 kg; and
   component (B) is a high-density polyethylene having a density of 0.945 g/cm$^3$ or more and a melt flow rate of 0.1 to 20 g/10 minutes at a temperature of 190°C under a load of 2.16 kg.

2. A packaging film according to claim 1 comprising 80 to 92% by weight of component (A) and 20 to 8% by weight of component (B).

3. A packaging film according to claim 1 or 2, wherein the content of the $\alpha$-olefin in component (A) is 1 to 10% by weight.

4. A packaging film according to any one of the preceding claims, wherein the $\alpha$-olefin in component (A) is 1-butene, 1-hexene, 4-methyl-1-pentene, or 1-octene.

5. A packaging film according to any one of the preceding claims, wherein component (A) has a melt flow rate of 0.5 to 5 g/10 minutes at a temperature of 190°C under a load of 2.16 kg.

6. A packaging film according to any one of the preceding claims, wherein component (A) has a density of 0.925 to 0.938 g/cm$^3$.

7. A packaging film according to any one of the preceding claims, wherein component (B) has a melt flow rate of 0.5 to 15 g/10 minutes at a temperature of 190°C under a load of 2.16 kg.

8. A packaging film according to any one of the preceding claims, wherein component (B) has a density of 0.945 to 0.965 g/cm$^3$.

9. A packaging film according to any one of the preceding claims, wherein the polyethylene resin composition has a density of 0.925 to 0.945 g/cm$^3$.

10. A laminate comprising a packaging film according to any one of the preceding claims and a film having favourable barrier properties.

11. A package for retorted food obtained by bonding a packaging film according to any one of claims 1 to 9 as an inner layer to another film having favourable barrier properties as an outer layer with an adhesive.

12. A package according to claim 11, wherein the film having favourable barrier properties is a nylon film or a poly(ethylene terephthalate) film.

**European Patent Office**

## EUROPEAN SEARCH REPORT

Application Number

EP 95 30 4236

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 292 007 (FUJI PHOTO FILM CO., LTD.) * page 6, line 24 - line 39; claims; examples * | 1-12 | C08L23/04 C08J5/18 |
| X | EP-A-0 492 656 (NIPPON PETROCHEMICALS COMANY, LTD.) * page 32, line 4 - line 17; claims 1-3 * | 1-9 | |
| X | EP-A-0 461 848 (MITSUI PETROCHEMICAL INDUSTRIES, LTD.) * page 25, line 15 - line 21; claims 1,3,7-9; example 9 * | 1-9 | |
| | | | TECHNICAL FIELDS SEARCHED (Int.Cl.6) |
| | | | C08L C08J |

The present search report has been drawn up for all claims

| Place of search | Date of completion of the search | Examiner |
|---|---|---|
| THE HAGUE | 5 October 1995 | Clemente Garcia, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)